# NEUE EUROPÄISCHE PATENTSCHRIFT

(11) **EP 0 802 129 B2**
(45) Veröffentlichungstag und Bekanntmachung des Hinweises auf die Entscheidung über den Einspruch: **31.08.2005**
(45) Hinweis auf die Patenterteilung: 23.05.2001
(21) Anmeldenummer: 97250117.5
(22) Anmeldetag: 15.04.1997
(51) Int. Cl.: B65G 15/10, B65G 37/00

(54) **Förderbahn für Stückgut, insbesondere für Gepäck-Behälter**
Conveyor path for articles, especially for luggage containers
Voie de transport pour articles, notamment pour containers à bagages

(30) Priorität: 16.04.1996 DE 19616907
(43) Veröffentlichungstag der Anmeldung: 22.10.1997
(73) Patentinhaber: SIEMENS AKTIENGESELLSCHAFT, 80333 München (DE)
(72) Erfinder: May, Bernd, 67069 Ludwigshafen (DE)

(56) Entgegenhaltungen:
- EP-A- 0 377 884
- EP-A- 0 389 741
- EP-A- 0 601 279
- DE-C- 4 407 163
- Firmendruckschrift "mulco-Spurzahnbänder und Spurzahnscheiben" der Anton Klocke Antriebstechnik GmbH, Bielefeld

## Beschreibung

Die Erfindung betrifft eine Förderbahn für Stückgut, insbesondere für Gepäck-Behälter.

Aus der deutschen Patentschrift DE 44 07 163 C1 ist eine Förderanlage für Paletten zum Abstellen von Kraftfahrzeugen bekannt, die im wesentlichen aus zwei parallel und mit Abstand zueinander verlaufenden Fördergurten zum Transport der Paletten besteht. Die Fördergurte sind jeweils endlos umlaufend ausgebildet und werden am Anfang und am Ende der Förderbahn über um horizontale Achsen drehbare Umlenkräder geführt, die antriebsmäßig mit einem Elektromotor verbunden sind. Die Übertragung der Antriebskraft zwischen den Umlenkrädern und dem einen flachen Querschnitt aufweisenden Fördergurt erfolgt reibschlüssig. Die Umlenkräder sind jeweils an den Enden von zwei parallel und in Förderrichtung verlaufenden Längsträgern gelagert.

In Förderrichtung gesehen zwischen den Umlenkrollen wird das obere Trum des Fördergurtes zusätzlich über Tragrollen abgestützt, die ebenfalls an den Längsträgern gelagert sind. Zur Seitenführung des Fördergurtes sind um senkrechte Achsen drehbare Führungsrollen bzw. seitlich neben dem Fördergurt sowie in Förderrichtung verlaufende Führungsschienen vorgesehen. Als weitere Möglichkeiten für die Führung des Fördergutes werden vorgeschlagen, entweder an den Tragrollen beidseitig Führungsscheiben anzuordnen, die Tragrollen ballig auszuführen oder die Tragrollen mit einer Umfangsnut zu versehen, über die ein komplementär ausgebildeter Steg geführt wird, der an der Unterseite des Fördergurtes angeordnet ist.

Derartige Fördergurte müssen, um u.a. etwaigem Schlupf zwischen den angetriebenen Umlenkrädern und dem Gurt entgegenzuwirken, stark vorgespannt werden. Die Vorspannung erfolgt über Spannstationen, die entsprechend der erforderlichen Spannlänge verschiedene Baugrößen aufweisen müssen. Eine Vereinheitlichung der Spannstationen ist daher kaum möglich. Außerdem müssen diese hohen Spannkräfte von der Tragkonstruktion des Förderers aufgenommen werden und diese entsprechend dimensioniert werden. Darüber hinaus ist durch die reibschlüssige Antriebsart des Gurtes ein Gleichlauf der beiden parallelen Fördergurte nicht immer gewährleistet, so daß es zu einem Verdrehen der Paletten kommen kann, wodurch eine zuverlässige Übergabe an nachfolgende Förderer beeinträchtigt werden könnte.

Des weiteren zeigt die europäische Patentanmeldung EP 601 279 A1 bereits ein Laufband für Personen, das über zwei Keilriemen in Verbindung mit zwei Zahnriemen angetrieben wird. Das Laufband besteht im wesentlichen aus in Förderrichtung aufeinanderfolgenden sowie quer zur Förderrichtung ausgerichteten Trittlamellen, die mit ihren seitlichen Enden auf dem kombinierten Keil- und Zahnriemen befestigt sind. Das Laufband und somit die kombinierten Keil- und Zahnriemen sind endlos ausgebildet und laufen um jeweils am Anfang und am Ende des Laufbandes angeordnete Umlenkrollen um. Die Kombination von Keil- und Zahnriemen für den Antrieb des Laufbandes wurde in Abkehr eines für Laufbänder sonst üblich verwendeten reinen Zahnriemenantriebes gewählt, um die Hauptantriebskraft von den Umlenkrädern in den Keilriemen einzuleiten und den Zähnen des Keilriemens nur noch die Aufgabe der Synchronisation der beidendig von den kombinierten Keil- und Zahnriemen angetriebenen Trittlamellen zu gewährleisten. Hierdurch soll die hauptsächlich von den in die Zahnscheibe eintauchenden Zähnen des Zahnriemens hervorgerufene Geräuschentwicklung minimiert werden. Zur Optimierung der Geräuschminderung wurden gleichzeitig auf dem Umfang der Zahnscheiben zahnlose Abschnitte vorgesehen, die sich mit verzahnten Bereichen abwechseln sowie der Abstand der Flanken der Zähne auf der Zahnscheibe so vergrößert, daß nur eine Flanke des Zahns des Zahnriemens in Eingriff mit der Zahnscheibe gelangt. In bezug auf den Antrieb spielt der Zahnriemen nur noch eine untergeordnete Rolle, da seine Haupffunktion in der Synchronisation der schlupfbehafteten Keilriementriebe liegt.

Auch ist bereits aus der Firmendruckschrift "mulco - Spurzahnbänder und Spurzahnscheiben" der Anton Klocke Antriebstechnik GmbH, Bielefeld ein sogenanntes Spurzahnband bekannt, das bevorzugt im Bereich der Transport- und Handhabungstechnik als spurtreu laufendes Synchronband verwendet wird. Diese Spurzahnbänder zeichnen sich durch eine Verbundkonstruktion aus einem Zahnriemen, einem Keilriemen und Stahlcord-Zugträgern in einem gemeinsamen Riemenaufbau aus. Hierbei verläuft der keilförmige Steg des Keilriemens auf der gezahnten Seite des Spurzahnbandes mittig und parallel zur Längserstreckung des Zahnriemens. Auf Seite 21 der vorliegenden Firmendruckschrift ist ein Stauförderer für Stückgut abgebildet, der zwei parallel zueinander verlaufende und voneinander beabstandete Spurzahnbändern aufweist. Die Spurzahnbänder sollen durch die Führung des keilförmigen Steges des Keilriemens gegen seitliches Verschieben gesichert sein.

Auch ist bereits aus einer weiteren Firmendruckschrift der Wieland Antriebstechnik GmbH, Springe mit dem Titel "Zahnriemen-Antriebe", eine Förderbahn bekannt, die zumindest zwei parallel und mit Abstand zueinander verlaufende Förderer mit einem endlos umlaufenden Zahnriemen als Fördermittel aufweist. Diese Zahnriemen sind jeweils am Anfang und am Ende der Förderbahn um Umlenkräder geführt und werden anscheinend zwischen den Umlenkrädern gleitend abgetragen.

Ferner zeigt die DE-AS 21 24 289 eine vorbekannte Förderbahn für Fluggepäck-Behälter mit mindestens zwei die Behälter tragenden und voneinander beabstandeten sowie parallel in Förderrichtung verlaufenden Förderern, von denen einer einen angetriebenen, endlos umlaufenden und über Umlenkräder geführten sowie als Flachgurt ausgebildeten Fördergurt aufweist. Der Fördergurt ist über in Förderrichtung gesehen hintereinander und zwischen den Umlenkrädern angeordnete Tragrollen abgestützt. Der andere parallel neben dem Förderer mit dem Gurt verlaufende Förderer weist in Förderrichtung gesehen hintereinander angeordnete freilaufende Förderrollen auf. Zusätzlich ist zwischen den Förderern eine Führungsschiene angeordnet, in die ein an der Unterseite der Behälter angeordnetes Führungselement eingreift.

Der vorliegenden Erfindung liegt die Aufgabe zugrunde, eine Förderbahn für Stückgut, insbesondere Gepäck-Behälter, zu schaffen, die bei konstruktiv einfacher Bauweise das Stückgut durch gleichförmigen Lauf des seitlich geführten Fördergurtes schonend fördert und die hohe Laufgeschwindigkeiten bei geringer Geräuschentwicklung ermöglicht.

Diese Aufgabe wird bei einer Förderbahn für Stückgut, insbesondere für Gepäck-Behälter durch die im Anspruch 1 aufgeführten Merkmale gelöst. Vorteilhafte Ausgestaltungen der Erfindung sind in den Unteransprüchen 2 bis 7 angegeben.

Die Lösung sieht - in Kombination mit den Merkmalen des Oberbegriffs des Anspruchs 1 - vor, dass der Fördergurt über in Förderrichtung gesehen hintereinander und zwischen den Umlenkrädern angeordnete Tragrollen abgestützt ist und der Steg des Fördergurtes von den zylindrisch oder ballig ausgebildeten Tragrollen abtragbar ist, wobei deren Umfangsflächen von den Zähnen des Fördergurtes beabstandet sind. Durch die Verwendung eines Zahnriemens als Fördergurt für den unmittelbaren Transport des Stückguts kann zunächst einmal die Spannstationen konstruktiv einfacher auszugestaltet werden, d.h. der zur Verfügung zu stellende Bereich möglicher Spannwege kann geringer ausfallen, da die Zahnriemen gegenüber den sonst üblich verwendeten Fördergurten eine geringere Längendehnung aufweisen, die im vorliegenden Fall etwa nur 0,2 % beträgt. Hierdurch können konstruktiv gleich ausgebildete Spannstationen für Förderbahnabschnitte im Bereich von einem bis 25 m verwendet werden. Darüber hinaus wird durch den Formschluß zwischen dem Zahnriemen und der Umlenkräder die Betriebssicherheit der Förderbahn erhöht, da kein Gurtschlupf und hierdurch hervorgerufene Störungen vorkommen können. Außerdem sind durch den Formschluß zwischen Zahnriemen und Zahnscheibe zur schlupffreien Übertragung der Antriebskräfte geringere Spannkräfte für den Riemen erforderlich als bei Flachgurten und reibschlüssiger Antriebskraftübertragung. Die geringeren Spannkräfte erlauben eine einfachere Ausbildung der Tragkonstruktion.
Durch die Anordnung eines aus der Oberfläche des Fördergurtes hervorstehenden Steges auf der dem Stückgut abgewandten und der mit den Zähnen versehenen Seite des Fördergurtes, wird eine gute Seitenführung des Fördergurtes im Bereich der Umlenkräder mit einer komplementär ausgebildeten umlaufenden Nut erreicht. Außerdem wird durch diesen Steg in Verbindung mit den Tragrollen, die eine zylindrische oder ballige Umfangsfläche aufweisen, ein durchgehender und somit gleichförmiger Lauf des Fördergurts auf der Tragrollenoberseite erreicht, da nur der Steg und nicht die Zähne des Fördergurtes auf der Umfangsfläche der Tragrolle ablaufen. Hierdurch wird gleichzeitig das Stückgut schonend gefördert. Auch wird hierdurch ein besonders lärmarmer Lauf des Fördergurtes erzielt und somit sind auch hohe Laufgeschwindigkeiten des Fördergurtes ohne störende Geräuschentwicklung möglich. Hieraus resultieren erreichbare Fördergeschwindigkeiten von etwa 5 m/s, wodurch derartige Förderbahnen sich insbesondere für Transferstrecken zur Förderung von Fluggepäck-Behältern eignen. Zur Führung des Fördergurtes können zusätzlich an den Tragrollen beidseitig Spurkränze vorgesehen werden. Die Ausbildung des Fördergurtes als Flachgurt mit rechteckigem Querschnitt ist für die Übertragung der Lasten des Stückguts auf die Tragrollen und der Antriebskräfte auf das Stückgut günstig.
Als besonders vorteilhaft für den Transport des Stückgutes, insbesondere der Gepäck-Behälter, hat sich die Ausbildung der Förderbahn mit zwei parallel und voneinander beabstandeten sowie in Förderrichtung verlaufenden Förderern, von denen ein Förderer einen Zahnriemen und der andere Förderer hintereinander angeordnete und freilaufend ausgebildete Förderrollen aufweist, erwiesen, da hierdurch Gleichlaufschwankungen beim Zahnriemen nicht zu einer Schrägstellung des Stückguts führen. Des weiteren wird eine Beruhigung des Laufs des Stückguts auf dem Förderer dadurch erreicht, daß die Förderrollen und die Tragrollen für den Zahnriemen in Förderrichtung gesehen gegeneinander versetzt angeordnet sind.
Besonders geeignet ist die vorliegende Förderbahn für den Transport von Behältern zur Aufnahme von Gepäck, wobei zusätzlich an der Unterseite der Behälter ein Führungselement angeordnet ist, das in einer in Förderrichtung gesehen zwischen den Förderrollen und dem Fördergurt verlaufenden Schiene geführt ist.

Die Erfindung wird nachfolgend anhand von den in den Zeichnungen dargestellten Ausführungsbeispielen näher beschrieben. Es zeigen:
Fig. 1 eine Draufsicht auf eine Förderbahn für Gepäck-Behälter,
Fig. 2 eine Seitenansicht von Figur 1,
Fig. 3 eine Schnittansicht von Figur 1 gemäß der Schnittlinie I-I,
Fig. 4 eine Ausschnittsvergrößerung von dem Bereich x der Figur 3,
Fig. 5 eine Schnittansicht von Figur 1 gemäß der Schnittlinie II-II,
Fig. 6 eine Ausschnittsvergrößerung von dem Bereich y der Figur 5.

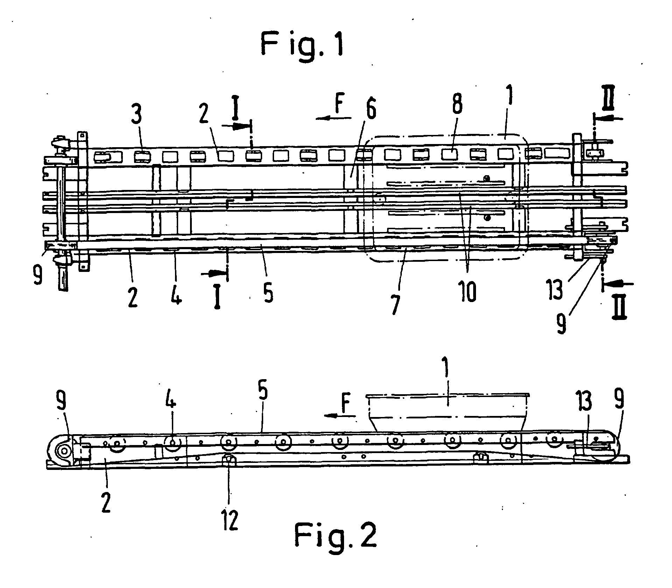

In Fig. 1 ist eine Draufsicht auf eine Förderbahn für Stückgut 1 in Form von Behältern für Gepäckstücke dargestellt, die im wesentlichen aus zwei parallel und mit Abstand zueinander verlaufenden Förderern mit Längsträgern 2 besteht, an denen in Förderrichtung F gesehen hintereinander und mit Abstand zueinander Förderrollen 3 oder Tragrollen 4 für einen Fördergurt 5 gelagert sind. Die Längsträger 2 sind C-förmig ausgebildet, jeweils aufrecht stehend mit ihren geschlossenen Seiten einander zugewandt und über mehrere Quertraversen 6 miteinander verbunden, sowie über nicht dargestellte höheneinstellbare Befestigungselemente mit dem Boden verbunden. In den Obergurten 7 der Längsträger 2 sind in Förderrichtung F aufeinander folgende und voneinander beabstandet angeordnete Öffnungen 8 vorgesehen, durch die von unten Förderrollen 3 bzw. Tragrollen 4 hindurchragen, die an den Stegen der Längsträger 2 um quer zur Förderrichtung F und horizontal verlaufende Achsen gelagert sind. Die Förderrollen 3 sind an dem in Förderrichtung F gesehen rechten Längsträger 2 angeordnet, die als handelsübliche Wälzlager mit einer Gummiummantelung des Außenringes ausgebildet sind. Hierdurch wird ein geräuscharmer Lauf des Stückgutes 1 über die Förderrollen 3 erzielt. Die Tragrollen 4 sind an dem in Förderrichtung F gesehen linken Längsträger 2 angeordnet und dienen zur Abstützung des Fördergurtes 5, der endlos umlaufend ausgebildet ist und am Anfang und am Ende des Längsträgers 2 über Umlenkräder 9, die um horizontale Achsen drehbar sind, umgelenkt wird.

Hierbei sind die Förderrollen 3 und die Tragrollen 4 jeweils nur in jeder zweiten Öffnung 8 angeordnet, wobei quer zur Förderrichtung F gesehen jeweils den Tragrollen 4 keine Förderrollen 3 gegenüberliegend angeordnet sind und umgekehrt.

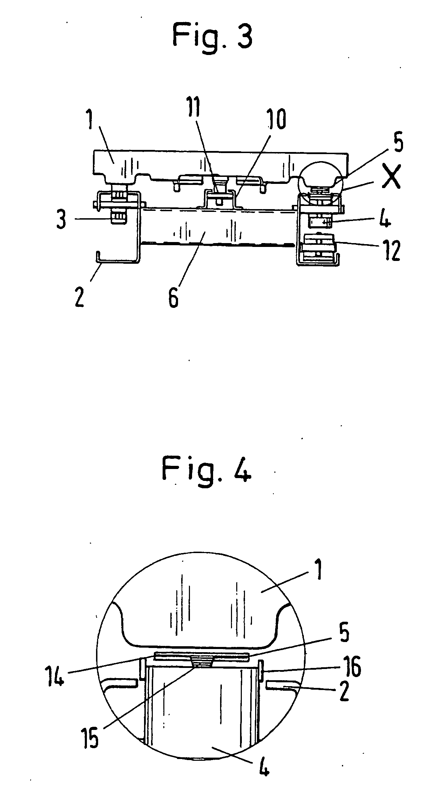

Des weiteren ist der Fig. 1 zu entnehmen, daß in der Mitte zwischen den beiden Längsträgern 2 eine Führungsschiene 10 vorgesehen ist, die auf den Quertraversen 6 befestigt ist und zur Führung der Behälter (Stückgut 1) über ein an der Unterseite der Behälters angeordnetes Führungselement 11 (s. Fig. 3) dient.

Die Fig. 2 zeigt eine Seitenansicht von der Fig. 1, und zwar auf die Seite des Längsträgers 2 mit den Tragrollen 4 für den Fördergurt 5. Es ist ersichtlich, daß die Tragrollen 4 jeweils nur in jeder zweiten Öffnung 8 angeordnet sind. Hierdurch können die linken und rechten Längsträger 2 fertigungstechnisch gleich ausgebildet werden. Das Untertrum des Fördergurtes 5 wird, um ein Durchhängen und ein Schleifen auf dem Boden zu vermeiden, über zwei in Förderrichtung F mit Abstand zueinander angeordnete Stützrollen 12 geführt. Die jeweils an den Enden der Längsträger 2 gelagerten Umlenkräder 9 sind nur an einem Ende über einen nicht dargestellten Antrieb antreibbar. Die nicht angetriebenen Umlenkräder 9 sind in Förderrichtung F verschiebbar gelagert, um über eine schematisch dargestellte Spannvorrichtung 13 den Fördergurt 5 vorspannen zu können.

Die Fig. 3 zeigt einen Querschnitt von Fig. 1 entlang der Schnittlinie I-I, der zu entnehmen ist, daß an dem Behälter (Stückgut 1), und zwar an dessen Unterseite ein stiftförmiges Führungselement 11 angeordnet ist, das in der Führungsschiene 10 quer zur Förderrichtung F geführt ist sowie durch diese Führungsschiene 10 von einem Abheben von der Förderbahn gehindert wird.

Die Ausschnittsvergrößerung von Fig. 3 aus dem Bereich x der Tragrolle 4, die in Fig. 4 zu sehen ist, zeigt, daß die Tragrolle 4 eine zylindrische Umfangsfläche ohne eingearbeitete Nuten aufweist und der Fördergurt 5 als Zahnriemen ausgebildet ist, der zusätzlich auf der dem Stückgut 1 abgewandten Seite und mittig einen nach unten in Richtung der Tragrolle 4 aus d er Kontur der Zähne 14 des Fördergurts herausragenden Steg 15 aufweist, der im Querschnitt trapezförmig ausgebildet ist. Dieser in Längsrichtung des Fördergurtes 5 verlaufende Steg 15 wird auf der Oberfläche der Tragrolle 4 abgetragen und weist eine Höhe auf, die verhindert, daß die Zähne 14 des Fördergurtes 5 in Kontakt mit der Oberfläche der Tragrollen 4 kommen. Hierdurch wird ein lärmarmer Lauf des Fördergurtes 5 erzielt. Zur Führung des Fördergurtes 5 sind an den Tragrollen 4 jeweils seitlich Spurkränze 16 angeordnet.

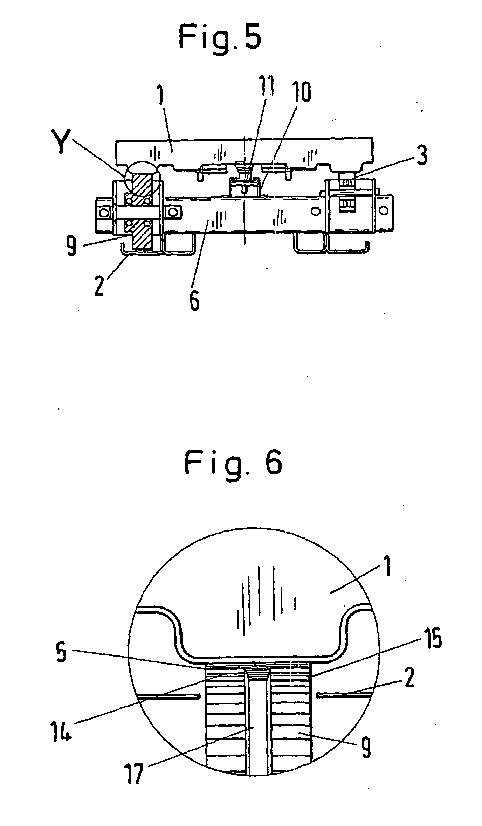

Ferner ist in der Fig. 5 ein Querschnitt von Fig. 1 entlang der Schnittlinie II-II gezeigt. Der Au sschnittsvergrößerung von Fig. 5 aus dem Bereich y ist zu entnehmen, daß die Umlenkräder 9 als Zahnscheiben ausgebildet sind, die zusätzlich in der Mitte eine umlaufende Nut 17 für den Steg 15 des Fördergurtes 5 aufweisen. Die auf der anderen Seite des Längsträgers 2 angeordneten angetriebenen Umlenkräder 9 sind entsprechend ausgebildet. Es ist auch möglich die nicht angetriebenen Umlenkräder 9 entsprechend den Tragrollen 4, also mit profilloser, zylindrischer Oberfläche auszubilden, um die Vorteile dieser Ausbildung bezüglich des ruhigen Laufs des Fördergurtes 5 zu nutzen.

## Patentansprüche

1. Förderbahn für Stückgut (1), insbesondere für Gepäck-Behälter, mit mindestens zwei das Stückgut (1) tragenden und voneinander beabstandet sowie parallel in Förderrichtung (F) verlaufenden Förderern, von denen mindestens einer einen angetriebenen, endlos umlaufenden und über Umlenkräder (9) geführten sowie als Zahnriemen ausgebildeten Fördergurt (5) aufweist, der auf der gezahnten Seite einen aus der Oberfläche des Fördergurtes (5) hervorstehenden Steg (15) aufweist, der parallel zur Längserstreckung des Fördergurtes (5) verläuft, und von dem auf der flachen ungezahnten Seite das Stückgut (1) abtragbar ist,
wobei der Fördergurt (5) über in Förderrichtung (F) gesehen hintereinander und zwischen den Umlenkrädern (9) angeordnete Tragrollen (4) abgestützt ist und der Steg (15) des Fördergurtes (5) von den zylindrisch oder ballig ausgebildeten Tragrollen (4) abtragbar ist, wobei deren Umfangsflächen von den Zähnen des Fördergurtes (5) beabstandet sind, und dass mindestens die angetriebenen Umlenkräder (9) als Zahnscheiben ausgebildet sind.

2. Förderbahn nach Anspruch 1,
**dadurch gekennzeichnet,**
**dass** in die Umlenkräder (9) jeweils komplementär zu dem Steg (15) ausgebildete Umfangsnuten (17) eingearbeitet sind.

3. Förderbahn nach Anspruch 2,
**dadurch gekennzeichnet,**
**dass** an den Tragrollen (4) beidseitig Spurkränze (16) angeordnet sind.

4. Förderbahn nach einem der Ansprüche 1 bis 3,
**dadurch gekennzeichnet,**
**dass** für den Transport des Stückguts (1) die Förderbahn einen Förderer mit einem Fördergurt (5) und einen weiteren Förderer mit Förderollen (3) aufweist.

5. Förderbahn nach Anspruch 4,
**dadurch gekennzeichnet,**
**dass** die Förderollen (3) freilaufend sind.

6. Förderbahn nach einem Anspruch 4 oder 5,
**dadurch gekennzeichnet,**
**dass** in Förderrichtung (F) gesehen die Förderollen (3) und die Tragrollen (4) gegeneinander versetzt angeordnet sind.

7. Förderbahn nach einem der Ansprüche 4 bis 6,
**dadurch gekennzeichnet,**
**dass** die Förderbahn für den Transport von Behältern (Stückgut 1) vorgesehen ist, an deren Unterseite ein Führungselement (11) angeordnet ist, das in einer in Förderrichtung (F) gesehen zwischen den Förderollen (3) und dem Fördergurt (5) verlaufenden Schiene (10) geführt ist.

## Claims

1. Conveying path for piece goods (1), in particular for luggage containers, having at least two conveyors which carry the piece goods (1) and extend spaced apart from another and in parallel in the conveying direction (F), of which conveyors at least one has a driven conveyor belt (5) which circulates endlessly, is guided over deflection wheels (9), is configured as a toothed belt and, on the toothed side, has a web (15) which protrudes from the surface of the conveyor belt (5), extends parallel to the longitudinal extent of the conveyor belt (5) and by which the piece goods (1) can be carried away on the flat untoothed side, the conveyor belt (5) being supported via carrying rollers (4) which are arranged between the deflection wheels (9) behind one another as seen in the conveying direction (F), and it being possible for the web (15) of the conveyor belt (5) to be carried away by the carrying rollers (4) of cylindrical or spherical configuration, their circumferential faces being spaced apart from the teeth of the conveyor belt (5), and at least the driven deflection wheels (9) being configured as toothed discs.

2. Conveying path according to Claim 1, **characterized in that** circumferential grooves (17) which are configured in each case to be complementary to the web (15) are machined into the deflection wheels (9).

3. Conveying path according to Claim 2, **characterized in that** wheel flanges (16) are arranged on both sides of the carrying rollers (4).

4. Conveying path according to one of Claims 1 to 3, **characterized in that**, for the transport of the piece goods (1), the conveying path has a conveyor having a conveyor belt (5) and a further conveyor having conveyor rollers (3).

5. Conveying path according to Claim 4, **characterized in that** the conveyor rollers (3) are free-wheeling.

6. Conveying path according to Claim 4 or 5, **characterized in that**, as seen in the conveying direction (F), the conveyor rollers (3) and the carrying rollers (4) are arranged offset with respect to one another.

7. Conveying path according to one of Claims 4 to 6, **characterized in that** the conveying path is provided for the transport of containers (piece goods 1), on the underside of which a guide element (11) is arranged which is guided in a rail (10) which extends between the conveyor rollers (3) and the conveyor belt (5) as seen in the conveying direction (F).

## Revendications

1. Voie de transport pour des articles (1), notamment des containers à bagages, comportant au moins deux convoyeurs s'étendant parallèlement dans la direction (F) de transport en étant à distance l'un de l'autre et portant l'article (1), au moins l'un d'entre eux comportant une courroie (5) de transport s'étendant sans fin en étant entraînée et guidée par des roues (9) de renvoi et formée en tant que courroie dentée, la courroie (5) comportant du côté denté une rainure (15) faisant saillie de la surface supérieure de la courroie (5) de transport, nervure qui s'étend parallèlement à l'extension en longueur de la courroie (5) de transport et par laquelle l'article (1) peut être transporté sur le côté sans dent plat,
la courroie (5) de transport étant supportée par l'intermédiaire de galets (4) de support disposés dans la direction (F) de transport l'un derrière l'autre et entre les roues (9) de renvoi et la nervure (15) de la courroie (5) de transport peut être supportée par les galets (4) de support de forme cylindrique ou bombée, les surfaces périphériques de ces galets étant à distance des dents de la courroie (5) de transport, et au moins les roues (9) de renvoi entraînées sont formées en tant que disques dentés.

2. Voie de transport suivant la revendication 1, **caractérisée en ce que**, dans les roues (9) de renvoi, sont usinées des rainures (17) périphériques formées de manière complémentaire à la nervure (15).

3. Voie de transport suivant la revendication 2, **caractérisée en ce que** des boudins (16) sont disposés des deux côtés des galets (4) de support.

4. Voie de transport suivant l'une des revendications 1 à 3, **caractérisée en ce que**, pour le transport de l'article (1), la voie de transport comporte une convoyeur comportant une courroie (5) de transport et un convoyeur supplémentaire avec des galets (3) de transport.

5. Voie de transport suivant la revendication 4, **caractérisée en ce que** les galets (3) de transport sont à roue libre.

6. Voie de transport suivant l'une des revendications 4 ou 5, **caractérisée en ce que** vus dans le direction (F) de transport, les galets (3) de transport et les galets (4) de support sont disposés mutuellement décalés.

7. Voie de transport suivant l'une des revendications 4 à 6, **caractérisée en ce que** la voie de transport est prévue pour le transport de containers (article 1), du côté inférieur desquels est disposé un élément (11) de guidage, qui vu dans la direction (F) de transport est guidé entre les galets (3) de transport et des rails (10) s'étendant dans la direction de la courroie (5) de transport.
